# EUROPEAN PATENT APPLICATION

(11) **EP 4 249 450 A1**
(43) Date of publication of application: **27.09.2023**
(21) Application number: 22163999.0
(22) Date of filing: 24.03.2022
(51) Int. Cl.: C04B 35/488, C04B 35/583, C03B 11/08

(54) **MOLD FOR GLASS FORMING AND PROCESS FOR PRODUCING A MOLD FOR GLASS FORMING**

(71) Applicant: 3M Innovative Properties Company, Saint Paul, MN 55133-3427 (US)
(72) Inventor: Joly, Samuel, 87437 Kempten (DE); Victor, Georg, 87487 Wiggensbach (DE)
(74) Representative: Mössner, Brigitte

(57) **Abstract**

The present disclosure relates to a mold for glass forming, wherein the mold comprises a ceramic material comprising from 35 to 70 percent by weight of hexagonal boron nitride, from 30 to 65 percent by weight of zirconium dioxide, and from 1 to 20 percent by weight of silicon carbide, based on the total weight of the ceramic material.

The present disclosure further relates to methods of forming glass components using said mold.

## Description

### Technical Field

The present disclosure relates to a mold for glass forming, the mold comprising a ceramic material comprising hexagonal boron nitride, zirconium dioxide and silicon carbide. The mold is usable for forming glass plates with surfaces having curved or textured regions.

### Background

For forming glass such as front and back glasses with surfaces having curved regions for mobile phones, usually a pressure molding process for which molds are used is applied. A flat glass plate is inserted between an upper and a lower part of a mold. This assembly is placed into a furnace and heated up to a temperature which is above the glass transition temperature (T_{g}) of the glass to be formed. Typically, the temperature to which the assembly is heated up is between the glass transition temperature (T_{g}) and the glass softening temperature (Tₛ) of the glass. This temperature is usually between 700 °C and 800 °C. In some applications, the temperature to which the assembly is heated up may also be higher, e.g., up to 1100 °C. The upper part of the mold is then pressed for a defined time against the glass plate and the lower part of the mold, thereby forming the glass plate having a surface with a curved region. Typical glass plates formed by this process are front and back glasses for mobile phones which are glass plates having a curved contour line. The formed glass plate is cooled down at the outlet section of the furnace. Alternatively, only a lower mold or an upper mold can be used, a flat glass plate is placed on the lower mold or on the upper mold, and vacuum may be applied to the glass for forming or gravity can be enough to form the glass when the flat glass plate is placed on the lower mold. The glass material of the formed glass plate is usually an aluminosilicate based glass and can be strengthened by addition of materials such as Li₂O, B₂O₃, CaO, K₂O or Fe₂O₃. The glass transition temperature (T_{g}) is the temperature above which the solid glass begins to exhibit viscoelastic properties. The glass transition temperature (T_{g}) may also be defined as the temperature at which the glass has a viscosity of 1013 Poise. The glass softening temperature (Tₛ) is the temperature at which the glass moves under its own weight. The glass softening temperature (Tₛ) may also be defined as the temperature at which the glass has a viscosity of 107.6 Poise.

For this glass forming process, molds made from graphite or nickel-chromium based alloys such as Inconel are currently used. These materials can be provided with a fine surface roughness which allows to produce formed glass plates having a surface with no visible defects.

However, these materials currently used show some disadvantages. The heating and forming process needs to be carried out in an oxygen free environment, as these materials are not oxidation resistant at the glass forming temperature. Moreover, graphite is a relatively soft material that can easily be scratched during use and wear over time, and it can lose hardness after repeated heating cycles. Inconel needs to be regularly coated with lubricants to avoid sticking of the glass to the metal-based mold.

JP2014152053A proposes a mold material for glass forming comprising 68-88 wt.% silicon carbide and 10-30 wt.% boron nitride.

CN108409115A proposes oxide and nitride ceramic materials as mold material for glass forming, specifically alumina and silicon nitride. Oxide ceramics and also silicon nitride tend to stick to glass at operating temperature.

Therefore, there is still a need for an improved material usable as molds for glass forming, specifically for molds for forming glass plates with surfaces having curved regions.

As used herein, "a", "an", "the", "at least one" and "one or more" are used interchangeably. The term "comprise" shall include also the terms "consist essentially of" and "consists of".

### Summary

In a first aspect, the present disclosure relates to a mold for glass forming, wherein the mold comprises a ceramic material comprising from 35 to 70 percent by weight of hexagonal boron nitride, from 30 to 65 percent by weight of zirconium dioxide, and from 1 to 20 percent by weight of silicon carbide, based on the total weight of the ceramic material.

In another aspect, the present disclosure also relates to a method of forming glass components comprising
placing a glass plate between an upper and a lower part of a mold as disclosed herein to form an assembly,
placing the assembly into a furnace and heating it up to a temperature which is above the glass transition temperature of the glass to be formed; and
pressing the upper part of the mold for a defined time against the glass plate and the lower part of the mold, thereby forming the glass plate having a surface with a curved region, or with a textured region.

In yet a further aspect, the present disclosure also relates to a method of forming glass components comprising
placing a glass plate on a lower mold or on an upper mold as disclosed herein to form an assembly,
placing the assembly into a furnace and heating it up to a temperature which is above the glass transition temperature of the glass to be formed; and
applying a vacuum for a defined time, thereby forming the glass plate having a surface with a curved region, or with a textured region.

In yet a further aspect, the present disclosure also relates to the use of the mold as disclosed herein in a process of forming a glass component having a surface with a curved region, or with a textured region.

The ceramic material of the mold disclosed herein is not sticking to the glass to be formed at operating temperature. The surface of the mold which is made from the ceramic material and which is in contact with the glass component to be formed during glass forming can be machined by chip-removing processes such as milling. By machining of the contact surface of the mold disclosed herein, a low surface roughness can be achieved which allows to produce formed glass plates having a surface with no visible defects.

The ceramic material of the mold disclosed herein is oxidation resistant at the glass forming temperature. Furthermore, the mold material is harder and more wear-resistant than graphite, and it does not lose hardness and flexural strength after repeated heating cycles. The mold can therefore be used for more glass forming cycles than conventional molds made from graphite. There is no need to regularly coat the mold disclosed herein with lubricants to avoid sticking of the glass to the mold.

For some applications, the temperature for glass forming is higher than the glass transition temperature (T_{g}) and the glass softening temperature (Tₛ), and higher than 800 °C. For example, the temperature for some applications, such as 2D or 3D glass texturing, may be up to 1100 °C.

It has been shown that the mold disclosed herein can be used at high temperatures of up to 1100 °C, and that the glass to be formed does not stick to the ceramic material of the mold.

### Detailed Description

The mold for glass forming as disclosed herein can be used in a process to form glass material into a desired shape, for example glasses with surfaces having curved regions such as front glasses for mobile phones with surfaces having curved regions. Such glasses with surfaces having curved regions are formed from flat glass plates. In this forming process, the mold is in direct contact with the glass material being heated up to the forming temperature. The mold for glass forming as disclosed herein can also be used in a process to form glasses with surfaces having textured regions such as back cover glasses for mobile phones with surfaces having textured regions.

The mold comprises a ceramic material. The ceramic material comprises from 35 to 70 percent by weight of hexagonal boron nitride (BN), from 30 to 65 percent by weight of zirconium dioxide (ZrO₂), and from 1 to 20 percent by weight of silicon carbide (SiC), based on the total weight of the ceramic material.

In some embodiments, the ceramic material comprises from 35 to 60 percent by weight of hexagonal boron nitride, from 35 to 60 percent by weight of zirconium dioxide, and from 2 to 20, preferably from 5 to 20, percent by weight of silicon carbide.

In some embodiments, the ceramic material comprises from 35 to 55 percent by weight of hexagonal boron nitride, from 35 to 55 percent by weight of zirconium dioxide, and from 2 to 20, preferably from 5 to 20, percent by weight of silicon carbide.

In some embodiments, the ceramic material comprises from 40 to 50 percent by weight of hexagonal boron nitride, from 40 to 50 percent by weight of zirconium dioxide, and from 2 to 15, preferably from 5 to 15, percent by weight of silicon carbide.

In some embodiments, the mold is made from the ceramic material.

Typically, the mean grain size of the zirconium dioxide in the ceramic material is from 1.0 to 10.0 µm. The mean grain size of the zirconium dioxide in the ceramic material can be determined by measuring the grain size of zirconium dioxide on scanning electron microscopy (SEM) micrographs of polished samples. Micrographs with a magnification of 1500x are used, and the longest diameter of each individual zirconium dioxide grain is measured. The mean grain size is calculated as the average value of the longest diameter of 50 individual zirconium dioxide grains.

The density of the ceramic material preferably is at least 85%, more preferably at least 88%, of the theoretical density of the ceramic material. In some embodiments, the density of the ceramic material is at least 90%, or at least 92%, or at least 94% of the theoretical density of the ceramic material.

The theoretical density of the ceramic material is calculated by the density of the pure hexagonal boron nitride, which is 2.25 g/cm³, the density of the pure zirconium dioxide, which is 5.68 g/cm³, the density of the pure silicon carbide, which is 3.21 g/cm³, and the respective fractions of hexagonal boron nitride, zirconium oxide and silicon carbide in the ceramic material.

The ceramic material may further comprise boron oxide (B₂O₃) in an amount of up to 2% by weight, based on the total weight of the ceramic material. Preferably, the ceramic material comprises at most 1.5% by weight of boron oxide (B₂O₃), based on the total weight of the composite material. In some embodiments, the ceramic material comprises at most 1.0% by weight of boron oxide (B₂O₃), based on the total weight of the composite material.

The ceramic material may comprise up to 5% by weight of further inorganic components, other than boron nitride, zirconium dioxide and silicon carbide.

For densifying the hexagonal boron nitride containing ceramic material by sintering, for example by hot-pressing, a liquid phase is advantageously used. Boron oxide (B₂O₃) may be used to provide the liquid phase.

The ceramic material may have a hardness of from 40 to 300 HBW 2.5/62.5. In some embodiments, the hardness of the ceramic material is from 40 to 200 HBW 2.5/62.5. The hardness of the ceramic material can be measured by the Brinell method according to DIN EN ISO 6506-1 (2013). The designation "HBW 2.5/62.5" means that the measurement has been carried out using a hard metal sphere of diameter 2.5 mm and with a load of 62.5 kg.

The flexural strength (4-point) at room temperature (23 °C) of the ceramic material may be at least 50 MPa, or at least 60 MPa, or at least 80 MPa, or at least 100 MPa.

The flexural strength (4-point) at 800 °C of the ceramic material may be at least 50 MPa, or at least 60 MPa, or at least 80 MPa, or at least 100 MPa.

The flexural strength (4-point) of the ceramic material does not change significantly in the temperature range from room temperature (23 °C) to 800 °C, which is the typical operating temperature of the mold. The flexural strength (4-point) at 800 °C of the ceramic material is at least 0.8 times the flexural strength (4-point) at room temperature (23 °C) of the ceramic material. Typically, the flexural strength (4-point) of the ceramic material in the temperature range from 23 °C to 800 °C does not differ more than +/-20%, preferably not more than +/- 15%, from the flexural strength (4-point) of the ceramic material at 23 °C.

As pressure is applied during the glass forming process to the contact surface of the mold, a robust flexural strength at the glass forming temperature is required to ensure a reliable process.

The mold as disclosed herein is used in a process of glass forming. By the process of glass forming, a glass component is formed, such as a front glass of a mobile phone with a surface having curved regions. The mold comprises a contact surface which is in contact with the glass component to be formed during the process of glass forming. The contact surface may have a surface roughness Rₐ of at most 1.0 µm. Preferably, the contact surface has a surface roughness Rₐ of at most 0.8 µm. In some embodiments, the contact surface has a surface roughness Rₐ of at most 0.7 µm. The low surface roughness allows to obtain formed glass plates by the glass forming process having a surface with no visible defects. The contact surface may have a surface roughness Rₐ of at least 0.15 µm, or of at least 0.2 µm, or of at least 0.3 µm, or of at least 0.4 µm, or of at least 0.5 µm. Preferably, the contact surface has a surface roughness Rₐ of at least 0.4 µm. In some embodiments, the contact surface may have a surface roughness Rₐ of at least 0.15 µm and at most 1.0 µm, or of at least 0.2 and at most 1.0 µm, or of at least 0.3 and at most 1.0 µm, or of at least 0.4 and at most 1.0 µm, or of at least 0.4 and at most 0.8 µm, or of at least 0.4 and at most 0.7 µm.

The surface roughness Rₐ is measured according to ISO 4287 (1997). The surface roughness Rₐ is the arithmetical mean deviation of the assessed profile according to ISO 4287 and may also be referred to as average roughness.

In some embodiments of the mold according to the present disclosure, the mean grain size of the zirconium dioxide in the ceramic material of the mold is from 1.0 to 10.0 µm, and the density of the ceramic material is at least 85% of the theoretical density of the ceramic material, and the ceramic material further comprises boron oxide (B₂O₃) in an amount of up to 2% by weight, based on the total weight of the ceramic material, and the ceramic material has a hardness of from 40 to 300 HBW 2.5/62.5, and the mold has a contact surface having a surface roughness Rₐ of at least 0.15 µm and at most 1.0 µm.

In some embodiments of the mold according to the present disclosure, the mean grain size of the zirconium dioxide in the ceramic material of the mold is from 1.0 to 10.0 µm, and the density of the ceramic material is at least 85% of the theoretical density of the ceramic material, and the ceramic material further comprises boron oxide (B₂O₃) in an amount of up to 2% by weight, based on the total weight of the ceramic material, and the ceramic material has a hardness of from 40 to 300 HBW 2.5/62.5, and the mold has a contact surface having a surface roughness Rₐ of at least 0.15 µm and at most 1.0 µm, and the flexural strength (4-point) at room temperature (23 °C) of the ceramic material is at least 50 MPa, and the flexural strength (4-point) at 800 °C of the ceramic material is at least 0.8 times the flexural strength (4-point) at room temperature (23 °C) of the ceramic material.

The mold for glass forming as disclosed herein, wherein the mold comprises a ceramic material, can be produced by a process comprising
providing a hexagonal boron nitride powder,
providing a zirconium dioxide powder,
providing a silicon carbide powder,
mixing the hexagonal boron nitride powder, the zirconium dioxide powder, and the silicon carbide powder, thereby obtaining a raw material mixture, wherein the raw material mixture comprises from 35 to 70 percent by weight of hexagonal boron nitride, from 30 to 65 percent by weight of zirconium dioxide, and from 1 to 20 percent by weight of silicon carbide, based on the total weight of the raw material mixture,
filling the raw material mixture into a graphite mold for hot-pressing,
hot-pressing the raw material mixture to obtain a densified block of the ceramic material, and
machining the densified block to obtain a mold for glass forming.

The zirconium dioxide powder may have a mean particle size (d₅₀) of from 1 to 10 µm. The mean particle size (d₅₀) of the zirconium dioxide powder can be measured by laser diffraction (Mastersizer, wet measurement).

The silicon carbide powder may have a mean particle size (d₅₀) of from 0.5 to 10 µm. In some embodiments, the silicon carbide powder has a mean particle size (d₅₀) of at most 7 µm, e.g., at most 6 µm, or even at most 5 µm. The mean particle size (d₅₀) of the silicon carbide powder can be measured by laser diffraction (Mastersizer, wet measurement).

The specific surface area (BET) of the silicon carbide powder may be from 1 to 15 m²/g.

The oxygen content of the silicon carbide powder may be up to 2.0 % by weight, based on the total weight of the silicon carbide powder.

The mean particle size of the hexagonal boron nitride powder may be from 0.5 to 5 µm. The mean particle size (d₅₀) of the hexagonal boron nitride powder can be measured by laser diffraction (Mastersizer, wet measurement).

The specific surface area (BET) of the hexagonal boron nitride powder may be from 5 to 30 m²/g.

The hexagonal boron nitride powder may comprise 2 to 7 %, e.g., 3 to 5 %, by weight of boron oxide (B₂O₃), based on the total weight of the hexagonal boron nitride powder in the ceramic material. Boron oxide may be added as boric acid (H₃BO₃) to the hexagonal boron nitride powder or may be contained in the hexagonal boron nitride powder as a result of the production process of the hexagonal boron nitride powder.

The hexagonal boron nitride powder, the zirconium dioxide powder, and the silicon carbide powder are mixed, thereby obtaining a raw material mixture. Mixing can be carried out as a dry mixing process. Mixing aggregates for dry mixing may be a cube blender, a vibration ball mill or a roller block.

After mixing, the raw material mixture may optionally be pre-compacted. The raw material mixture is filled into a graphite mold for hot-pressing, and the raw material mixture is hot-pressed to obtain a densified block of the ceramic material. The densified blocks of the ceramic material are also called billets. Hot-pressing is carried out in inert gas atmosphere such as nitrogen or argon. Hot-pressing may be carried out at a temperature of from 1600 to 2200 °C and a pressure of from 10 to 30 MPa.

After hot-pressing, the densified block is machined to obtain a mold for glass forming. The mold is used in a process of glass forming, and a glass component is formed by the process of glass forming. The mold comprises a contact surface. The contact surface is in contact with the glass component to be formed during the process of glass forming. The contact surface may have any desired shape. For example, the contact surface may have curved regions to correspond to the surfaces of front glasses of mobile phones having curved regions. The contact surface of the mold is machined. Machining may be carried out by a chip-removing process. A suitable machining process for the contact surface is milling. Optionally, a subsequent polishing step may follow. Preferably, the contact surface is machined by milling without a subsequent polishing step. It has been found that the contact surface can be machined by milling and no subsequent polishing step is necessary to achieve a surface roughness suitable for the glass forming process for forming glasses having surfaces with curved regions. By machining, a low surface roughness of the contact surface can be achieved. The contact surface may have a surface roughness Rₐ of at most 1.0 µm. Preferably, the contact surface has a surface roughness Rₐ of at most 0.8 µm. In some embodiments, the contact surface has a surface roughness Rₐ of at most 0.7 µm. The contact surface may have a surface roughness Rₐ of at least 0.15 µm, or of at least 0.2 µm, or of at least 0.3 µm, or of at least 0.4 µm, or of at least 0.5 µm. Preferably, the contact surface has a surface roughness Rₐ of at least 0.4 µm. In some embodiments, the contact surface may have a surface roughness Rₐ of at least 0.15 µm and at most 1.0 µm, or of at least 0.2 µm and at most 1.0 µm, or of at least 0.3 and at most 1.0 µm, or of at least 0.4 and at most 1.0 µm, or of at least 0.4 and at most 0.8 µm, or of at least 0.4 and at most 0.7 µm.

Surprisingly, by machining of the contact surface of the mold by chip-removing processes, zirconium dioxide and silicon carbide particles do not chip off from the surface of the mold or at least chipping off of zirconium dioxide and silicon carbide particles can be minimized. Therefore, a low surface roughness can be achieved.

The mold as disclosed herein can be used in a process of forming glass components, preferably glass plates having a surface with a curved region, or with a textured region. The process of forming glass plates may be a pressure molding process, or a vacuum molding process, or a combination of both.

Further disclosed herein are methods of forming glass components using the molds of the present disclosure.

In some embodiments, both an upper part and a lower part of a mold are used. Such methods comprise:
placing a glass plate between an upper and a lower part of a mold as disclosed herein, to form an assembly,
placing the assembly into a furnace and heating it up to a temperature which is above the glass transition temperature of the glass to be formed; and
pressing the upper part of the mold for a defined time against the glass plate and the lower part of the mold, thereby forming the glass plate having a surface with a curved region, or with a textured region.

Both the upper part and the lower part of the mold, or only one of the upper part and the lower part of the mold, may comprise the ceramic material comprised in the mold. In some embodiments, both the upper part and the lower part of the mold, or only one of the upper part and the lower part of the mold, are made from the ceramic material comprised in the mold.

In some embodiments, at least one of the lower and the upper part of the mold comprises a first portion made from a material different from the ceramic material, e.g., graphite, and a second portion comprising a contact surface of the mold for the glass component to be formed, with the second portion comprising the ceramic material comprised in the mold. The first portion does not comprise a contact surface of the mold for the glass component to be formed, i.e., only the second portion is in contact with the glass component to be formed.

In some embodiments, only a one part mold may be used, i.e., either the upper part or lower part of a mold is used. Such methods comprise;
placing a glass plate on a lower mold or on an upper mold as disclosed herein, to form an assembly,
placing the assembly into a furnace and heating it up to a temperature which is above the glass transition temperature of the glass to be formed; and
applying a vacuum to press the glass plate against the lower mold or the upper mold for a defined time, thereby forming the glass plate having a surface with a curved region, or with a textured region.

In the methods of forming glass components using the molds of the present disclosure, the glass plate is brought into contact with a contact surface of the mold, and the contact surface may have a surface roughness Rₐ of at most 1.0 µm, typically of at least 0.15 µm and at most 1.0 µm.

In some embodiments of the methods of forming glass components disclosed herein, the mean grain size of the zirconium dioxide in the ceramic material of the mold is from 1.0 to 10.0 µm, and the density of the ceramic material is at least 85% of the theoretical density of the ceramic material, and the ceramic material further comprises boron oxide (B₂O₃) in an amount of up to 2% by weight, based on the total weight of the ceramic material, and the ceramic material has a hardness of from 40 to 300 HBW 2.5/62.5, and the mold has a contact surface having a surface roughness Rₐ of at least 0.15 µm and at most 1.0 µm.

In some embodiments of the methods of forming glass components disclosed herein, the mean grain size of the zirconium dioxide in the ceramic material of the mold is from 1.0 to 10.0 µm, and the density of the ceramic material is at least 85% of the theoretical density of the ceramic material, and the ceramic material further comprises boron oxide (B₂O₃) in an amount of up to 2% by weight, based on the total weight of the ceramic material, and the ceramic material has a hardness of from 40 to 300 HBW 2.5/62.5, and the mold has a contact surface having a surface roughness Rₐ of at least 0.15 µm and at most 1.0 µm, and the flexural strength (4-point) at room temperature (23 °C) of the ceramic material is at least 50 MPa, and the flexural strength (4-point) at 800 °C of the ceramic material is at least 0.8 times the flexural strength (4-point) at room temperature (23 °C) of the ceramic material.

In some embodiments of the methods of forming glass components disclosed herein, the ceramic material of the mold comprises from 35 to 60 percent by weight of hexagonal boron nitride, from 35 to 60 percent by weight of zirconium dioxide, and from 2 to 20, preferably from 5 to 20, percent weight of silicon carbide.

In some embodiments of the methods of forming glass components disclosed herein, the ceramic material of the mold comprises from 35 to 55 percent by weight of hexagonal boron nitride, from 35 to 55 percent by weight of zirconium dioxide, and from 2 to 20, preferably from 5 to 20, percent weight of silicon carbide.

In some embodiments of the methods of forming glass components disclosed herein, the ceramic material of the mold comprises from 40 to 50 percent by weight of hexagonal boron nitride, from 40 to 50 percent by weight of zirconium dioxide, and from 2 to 15, preferably from 5 to 15, percent weight of silicon carbide, based on the total weight of the ceramic material.

In some embodiments of the methods of forming glass components disclosed herein, the density of the ceramic material is at least 88%, or at least 90%, or at least 92%, or at least 94% of the theoretical density of the ceramic material.

### Examples

### Test methods

### Measurement of surface roughness

The surface roughness Rₐ is measured according to ISO 4287 (1997). The surface roughness Rₐ is the arithmetical mean deviation of the assessed profile according to ISO 4287 and may also be referred to as average roughness. Surface roughness is measured by the stylus method, using a MarSurf XR 1 (Mahr GmbH, Germany), with a profile filter according to ISO 16610-21 (2011) and calculating the surface roughness parameters according to ISO 4287 (1997). The measurement length was 5.6 mm. The average value is calculated based on 3 measurements.

### Hardness measurement

The hardness of the ceramic material is measured by the Brinell method according to DIN EN ISO 6506-1 (2013). Measurements are carried out using a hard metal sphere of diameter 2.5 mm and with a load of 62.5 kg.

### Measurement of content of boron oxide (B₂O₃) in the ceramic material

The content of boron oxide (B₂O₃) in the ceramic material is determined according to DIN 54387-1:2016-10 and 54387-2:2016-12. A sub-sample of the ceramic material is crushed and milled to a particle size < 150 µm. Boron oxide is extracted with water from the powdered sample by boiling under reflux for 1 hour. The amount of extracted boron oxide in the suspension is volumetrically measured as boric acid (H₃BO₃) using the mannitoboric acid procedure and expressed, taking into account the sample mass, as content of boron oxide (B₂O₃) of the ceramic material sample in percentage by weight.

### Measurement of content of boron oxide (B₂O₃) in boron nitride powder

The content of boron oxide (B₂O₃) in the boron nitride powder is determined according to DIN 54387-2:2016-12. Boron oxide is extracted with water from a boron nitride powder sample at 60 °C for 1 hour. The amount of extracted boron oxide in the boron nitride - water suspension is volumetrically measured as boric acid (H₃BO₃) using the mannitoboric acid procedure and expressed, taking into account the sample weight, as content of boron oxide (B₂O₃) of the boron nitride powder sample in percentage by weight.

### Measurement of total oxygen content in the ceramic material

The content of total oxygen in the ceramic material is determined according to DIN 54387-1:2016-10 and 54387-3:2016-12. A sub-sample of the ceramic material is crushed and milled to a particle size < 150 µm. The amount of oxygen in the powdered sample is measured by CGHE method (carrier gas hot extraction, or inert gas fusion analysis) using high-temperature graphite crucibles and nickel as a melt forming additive and expressed, taking into account the sample weight, as content of total oxygen of the ceramic material sample in percent by weight.

### Measurement of lattice oxygen content in hexagonal boron nitride powder

In a first step, the water-soluble boron oxide (B₂O₃) in the hexagonal boron nitride powder is removed by a washing process with water at 60 °C. In a second step, the content of lattice oxygen in the boron nitride powder is determined according to DIN 54387-3:2016-12. The amount of oxygen in the boron nitride powder sample is measured by CGHE method (carrier gas hot extraction, or inert gas fusion analysis) using high-temperature graphite crucibles and nickel as a melt forming additive and expressed, taking into account the sample weight, as content of total oxygen of the hexagonal boron nitride powder sample in percent by weight.

### Measurement of mean grain size of the zirconium dioxide in the ceramic material

The mean grain size of the zirconium dioxide in the ceramic material can be determined by measuring the grain size of zirconium dioxide on SEM (scanning electron microscopy) micrographs of polished samples. Micrographs with a magnification of 1500x are used, and the longest diameter of each individual zirconium dioxide grain is measured. The mean grain size is calculated as the average value of the longest diameter of 50 individual zirconium dioxide grains.

### Measurement of mean particle size (d₅₀) of zirconium dioxide and silicon carbide powder

Measurement is carried out by laser diffraction, using a Mastersizer 2000 (Malvern). A sample of zirconium dioxide or silicon carbide powder, respectively, is dispersed in water with a wetting agent and is ultrasonically treated for 90 seconds in an ultrasonic bath plus during the measurement with a setting of 20% for the internal ultrasonic source of the Mastersizer. Measurement is carried out while stirring with 1750 rpm and with 20% for the internal ultrasonic source. The average value is calculated based on 3 measurements.

### Measurement of mean particle size (d₅₀) of hexagonal boron nitride powder

Measurement is carried out by laser diffraction, using a Mastersizer 2000 (Malvern). A sample of hexagonal boron nitride powder is dispersed in ethanol and treated for 30 seconds with setting of 70% for the internal ultrasonic source of the Mastersizer. Measurement is carried out while stirring with 1750 rpm and without internal ultrasonic source. The average value is calculated based on 3 measurements.

### Measurement of flexural strength of ceramic composites at room temperature

Flexural strength at room temperature (23 °C) is measured according to ISO 14704 (2016) in four-point-1/4 point flexure with a support length of 40 mm and a distance of the load rollers of 20 mm, and using a fully articulating fixture. The size of the test samples is 5x5x50 mm. Test samples were prepared by cutting from a sinter billet and grinding. Six samples were measured and the average value of the six measurement results is reported.

### Measurement of flexural strength of ceramic composites at 800°C

Flexural strength at high temperature (800 °C) is measured according to DIN EN 820-1:2002. Test samples with the dimensions 5×5×50mm³ are cut from a sinter billet and grinded. The test samples are set in a fixture for flexural strength measurement and placed in a furnace. In the fixture, two rollers are positioned on the lower side of the sample. The furnace is heated up at a rate of 7K/min in air until the final temperature of 800 °C is reached. Two rollers set on a servo-hydraulic press apply a gradual force on the test sample of 5N/s from the top, and the 4-point flexural strength is measured. The measurement is repeated on six samples and the average value of the six measurement results is reported.

### Example 1

In a cube blender, 21.5 kg of zirconium dioxide powder, 2.5 kg of silicon carbide powder, and 26 kg of boron nitride powder were pre-mixed. A zirconium dioxide powder having a mean particle size (d₅₀) of 3.7 µm (Zircone CC10 from SEPR Département ZiPro, Le Pontet, France), a silicon carbide powder having a mean particle size (d₅₀) of 2.7 µm, and a boron nitride powder having a mean particle size (d₅₀) of 3.8 µm, a lattice oxygen content of 0.7 wt.% and a content of boron oxide (B₂O₃) of 3.5 wt.% were used.

After pre-mixing, a further mixing step was carried out in a vibration mill with hard metal balls. The mixed powder was then compacted by cold isostatic pressing and granulated by a screen granulator. The granulated mixed powder was then filled in a graphite mold. Uniaxial hot-pressing was carried out at a temperature of 1700 °C and a pressure of 23 MPa. A densified billet of a ceramic material comprising zirconium dioxide, silicon carbide and boron nitride with a diameter of 320 mm and a height of 350 mm was obtained.

The hot-pressed billet had a density 2.95 g/cm³, corresponding to of 94% of theoretical density. The content of boron oxide (B₂O₃) in the ceramic material was 0.48 wt.%, the total oxygen content was 13.7 wt.%. The Brinell hardness was 69 HBW 2.5/62.5. The flexural strength (4-point) of the ceramic material was 130 MPa at room temperature (23 °C). The flexural strength (4-point) of the ceramic material was 120 MPa when measured at 800 °C.

The mean grain size of the zirconium dioxide in the ceramic material is 6.5 µm. The mean grain size of the zirconium dioxide in the ceramic material is determined by SEM as described above.

Samples with dimensions 210x60x20 mm³ were cut from the hot-pressed billet. On these plates, surfaces with dimensions 210x60 mm² were milled with a feed rate of 150 mm/min and a rotational speed of 8.000 rpm, using a single-lip PCD (polycrystalline diamond) milling tool with a diameter of 16.6 mm. The milled surfaces had a surface roughness Rₐ of 0.52 µm.

From the hot-pressed billet, molds for glass forming can be machined having any desired shape, for example having surfaces with curved regions, and comprising a contact surface with a smooth surface, for example with a surface roughness Rₐ of 0.52 µm.

A high temperature bending test was performed. For this test, a lower part and an upper part of a mold for a front glass of a mobile phone were machined from the hot-pressed billet. The front glass of the mobile phone is a flat glass with the sides being curved, i.e., with a curved circumferential outer contour. The lower part of the mold has a cavity with a flat rectangular bottom surface and side walls being inclined at an angle of 90 degrees to the bottom surface, with a curved transition zone, with a transition radius of 3.65 mm, from the bottom surface to the side walls. A flat glass plate (made from a material for a front glass of a mobile phone) is put into the lower part of the mold, such that initially there is no contact between the bottom surface and the glass plate and the glass plate contacts the lower part of the mold only at the side walls of the cavity. The upper part of the mold has the form of a matching counterpart for the lower part. The surface roughness Rₐ of the contact surfaces of the mold was 0.89 µm for the lower part and 0.72 µm for the upper part. The assembly of the lower part of the mold with the glass plate and the upper part of the mold is heated up to a temperature above the glass transition temperature of the glass plate (780 °C). The upper part of the mold is pressed against the glass plate and the lower part of the mold. Thereby a glass plate is obtained which has a surface with a curved circumferential outer contour, and which can be used as a front glass for a mobile phone.

The lower part and the upper part of the mold did not stick to the glass plate, and the obtained glass plate with the surface with the curved circumferential outer contour could be easily demolded.

The surface roughness Rₐ of the contact surfaces of the lower part and the upper part was measured after 15 cycles of heating and forming of a glass plate, and was found to be unchanged, i.e., the surface roughness Rₐ remained stable with 0.75 µm for the lower part and 0.64 µm for the upper part.

### Example 2

Example 1 was repeated, with the exception that 21.5 kg of zirconium dioxide powder, 4.2 kg of silicon carbide powder, and 24.3 kg of boron nitride powder were mixed, and that the zirconium dioxide powder used had a mean particle size (d₅₀) of 0.9 µm (Zircone CC20 from SEPR Département ZiPro, Le Pontet, France) and the boron nitride powder used had a mean particle size (d₅₀) of 3.3 µm, and a lattice oxygen content of 0.9 wt.%. The content of boron oxide (B₂O₃) in the hexagonal boron nitride powder also was 3.5 wt.%. Powder mixing and hot-pressing of the billet was carried out as described for Example 1.

The hot-pressed billet had a density of 3.05 g/cm³, corresponding to 97.1% of theoretical density. The content of boron oxide in the ceramic material was 0.26 wt.%, the total oxygen content was 13.1 wt.%. The Brinell hardness was 82 HBW 2.5/62.5. The flexural strength (4-point) of the ceramic material was 102 MPa at room temperature (23 °C). The flexural strength (4-point) of the ceramic material was 104 MPa when measured at 800 °C.

The mean grain size of the zirconium dioxide in the ceramic material is 3.3 µm. The mean grain size of the zirconium dioxide in the ceramic material is determined by SEM as described above.

Samples with dimensions 210x60x20 mm³ were cut from the hot-pressed billet. On these plates, surfaces with dimensions 210x60 mm² were milled with a feed rate of 150 mm/min and a rotational speed of 8.000 rpm, using a single-lip PCD (polycrystalline diamond) milling tool with a diameter of 16.6 mm. The milled surfaces had a surface roughness Rₐ of 0.55 µm.

From the hot-pressed billet, molds for glass forming can be machined having any desired shape, for example having surfaces with curved regions, and comprising a contact surface with a smooth surface, for example with a surface roughness Rₐ of 0.55 µm.

### Reference Example 1

Example 1 was repeated, with the exception that 20 kg of zirconium dioxide powder and 30 kg of boron nitride powder were mixed, and no silicon carbide powder was added. The zirconium dioxide powder used had a mean particle size (d₅₀) of 0.9 µm (Zircone CC10 from SEPR Département ZiPro, Le Pontet, France) and the boron nitride powder used had a mean particle size (d₅₀) of 3.7 µm, and a lattice oxygen content of 0.8 wt.%. The content of boron oxide (B₂O₃) in the hexagonal boron nitride powder was 2%. Powder mixing and hot-pressing of the billet was carried out as described for Example 1.

The hot-pressed billet had a density of 2.82 g/cm³, corresponding to 96.3% of theoretical density. The content of boron oxide in the ceramic material was 1.98 wt.%, the total oxygen content was 12.8 wt.%. The Brinell hardness was 55 HBW 2.5/62.5. The flexural strength (4-point) of the ceramic material was 118 MPa at room temperature (23 °C). The flexural strength (4-point) of the ceramic material was 13.4 MPa when measured at 800 °C.

The mean grain size of the zirconium dioxide in the ceramic material is 3.3 µm. The mean grain size of the zirconium dioxide in the ceramic material is determined by SEM as described above.

Samples with dimensions 210x60x20 mm³ were cut from the hot-pressed billet. On these plates, surfaces with dimensions 210x60 mm² were milled with a feed rate of 150 mm/min and a rotational speed of 8.000 rpm, using a single-lip PCD (polycrystalline diamond) milling tool with a diameter of 16.6 mm. The milled surfaces had a surface roughness Rₐ of 0.46 µm.

A high temperature bending test was performed. For this test, a lower part and an upper part of a mold for a front glass of a mobile phone were machined from the hot-pressed billet. The front glass of the mobile phone is a flat glass with the sides being curved, i.e., with a curved circumferential outer contour. The lower part of the mold has a cavity with a flat rectangular bottom surface and side walls being inclined at an angle of 90 degrees to the bottom surface, with a curved transition zone, with a transition radius of 3.65 mm, from the bottom surface to the side walls. A flat glass plate (made from a material for a front glass of a mobile phone) is put into the lower part of the mold, such that initially there is no contact between the bottom surface and the glass plate and the glass plate contacts the lower part of the mold only at the side walls of the cavity. The upper part of the mold has the form of a matching counterpart for the lower part. The surface roughness Rₐ of the contact surfaces of the mold was 0.73 µm for the lower part and 0.53 µm for the upper part. The assembly of the lower part of the mold with the glass plate and the upper part of the mold is heated up to a temperature above the glass transition temperature of the glass plate (780 °C). The upper part of the mold is pressed against the glass plate and the lower part of the mold.

It was observed that the lower part and the upper part of the mold did stick to the glass plate, and it was not possible to demold the glass plate. Furthermore, the glass plate was broken after the high temperature bending test, and large portions of ceramic material chipped off from the surfaces of the mold that had been in contact with the press stamp, which can be explained by the low high-temperature strength of the ceramic material. This test shows that the ceramic material of the reference example has proven to be unsuitable as mold material for glass forming.

## Claims

1. A mold for glass forming, wherein the mold comprises a ceramic material comprising from 35 to 70 percent by weight of hexagonal boron nitride, from 30 to 65 percent by weight of zirconium dioxide, and from 1 to 20 percent by weight of silicon carbide, based on the total weight of the ceramic material.

2. The mold according to claim 1, wherein the ceramic material comprises from 35 to 60 percent by weight of hexagonal boron nitride, from 35 to 60 percent by weight of zirconium dioxide, and from 2 to 20 percent weight of silicon carbide.

3. The mold according to any of claims 1 to 2, wherein the mean grain size of the zirconium dioxide in the ceramic material is from 1.0 to 10.0 µm.

4. The mold according to any of claims 1 to 3, wherein the density of the ceramic material is at least 85% of the theoretical density of the ceramic material.

5. The mold according to any of claims 1 to 4, wherein the ceramic material further comprises boron oxide (B₂O₃) in an amount of up to 2% by weight, based on the total weight of the ceramic material.

6. The mold according to any of claims 1 to 5, wherein the ceramic material has a hardness of from 40 to 300 HBW 2.5/62.5.

7. The mold according to any of claims 1 to 6, wherein the flexural strength (4-point) at room temperature (23 °C) of the ceramic material is at least 50 MPa.

8. The mold according to any of claims 1 to 7, wherein the flexural strength (4-point) at 800 °C of the ceramic material is at least 0.8 times the flexural strength (4-point) at room temperature (23 °C) of the ceramic material.

9. The mold according to any of claims 1 to 8, wherein the mold has a contact surface having a surface roughness Ra of at most 1.0 µm.

10. The mold according to any of claims 1 to 9,
wherein the mean grain size of the zirconium dioxide in the ceramic material is from 1.0 to 10.0 µm,
and wherein the density of the ceramic material is at least 85% of the theoretical density of the ceramic material,
and wherein the ceramic material further comprises boron oxide (B₂O₃) in an amount of up to 2% by weight, based on the total weight of the ceramic material,
and wherein the ceramic material has a hardness of from 40 to 300 HBW 2.5/62.5, and wherein the mold has a contact surface having a surface roughness Rₐ of at least 0.15 µm and at most 1.0 µm.

11. Use of the mold of any of claims 1 to 10 in a process of forming a glass component having a surface with a curved region, or with a textured region.

12. A method of forming glass components comprising
placing a glass plate between an upper and a lower part of a mold, according to any one of claim 1 to 10 to form an assembly,
placing the assembly into a furnace and heating it up to a temperature which is above the glass transition temperature of the glass to be formed; and
pressing the upper part of the mold for a defined time against the glass plate and the lower part of the mold, thereby forming the glass plate having a surface with a curved region, or with a textured region.

13. A method of forming glass components comprising
placing a glass plate on a lower mold or on an upper mold according to any one of claim 1 to 10 to form an assembly,
placing the assembly into a furnace and heating it up to a temperature which is above the glass transition temperature of the glass to be formed; and
applying a vacuum to press the glass plate against the lower mold or the upper mold for a defined time, thereby forming the glass plate having a surface with a curved region, or with a textured region.

14. The method of claim 12 or 13, wherein the glass plate is brought into contact with a contact surface of the mold, and the contact surface has a surface roughness Rₐ of at most 1.0 µm.

15. The method of any one of claims 12 to 14,
wherein the mean grain size of the zirconium dioxide in the ceramic material is from 1.0 to 10.0 µm,
the density of the ceramic material is at least 85% of the theoretical density of the ceramic material,
the ceramic material further comprises boron oxide (B₂O₃) in an amount of up to 2% by weight, based on the total weight of the ceramic material,
the ceramic material has a hardness of from 40 to 300 HBW 2.5/62.5, and
the mold has a contact surface having a surface roughness Rₐ of at least 0.15 µm and at most 1.0 µm.
